# EUROPEAN PATENT SPECIFICATION

(11) **EP 0 408 093 B1**
(45) Date of publication and mention of the grant of the patent: **13.12.1995**
(21) Application number: 90200544.6
(22) Date of filing: 08.03.1990
(51) Int. Cl.: H02K 49/10, B01F 13/08

(54) **Improved magnetic coupling for motion transmission through walls of closed containers**
Magnetische Kupplung für die Übertragung von Bewegung durch die Wände abgeschlossener Gefässe
Accouplement magnétique pour la transmission d'un mouvement à travers les parois d'enceintes fermées

(30) Priority: 12.07.1989 IT 2115889
(43) Date of publication of application: 16.01.1991
(73) Proprietor: FEDEGARI AUTOCLAVI SPA, I-27010 Albuzzano (PV) (IT)
(72) Inventor: Fedegari, Fortunato, I-27100 Pavia PV (IT)
(74) Representative: Michelotti, Giuliano

(56) References cited:
- DE-A- 3 039 810
- FR-A- 2 256 685
- FR-A- 2 373 729
- US-A- 3 932 068
- US-A- 4 812 108
- PATENT ABSTRACTS OF JAPAN vol. 4, no. 36 (E-3)(518) 26 March 1980, & JP-A- 55 8259
- PATENT ABSTRACTS OF JAPAN vol. 8, no. 87 (M-291)(1524) 20 April 1984, & JP-A- 59 3200

## Description

The present invention relates to a magnetic coupling of the type adapted to transmit a rotary motion of a shaft through the wall of a closed container or wessel and, particularly, relates to a magnetic coupling which can be used in autoclaves operating at medium temperature and medium to low pressure.

When it is necessary to transmit a mechanical motion from a motor, placed in an outer environnment, to a particular internal environment (for example a closed container) which is distinguished from the outer environment owing to pressure and/or temperature conditions, or the like, normally are used either passing shafts, provided with particular seal tight elements or rotating seals, or the so-called magnetic couplings which permit a transmission of motion even providing an absolutely hermetic tightness between the outer and internal environment.

The first solution consisting in passing shaft provided with seal tight elements or rotating seals has the advantage of permitting the transmission of torques just limited by the physical characteristic of the shaft itself, but has the drawback of not providing a perfectly hermetic tightness between the two environments.

The second solution using a standard magnetic coupling has serious problems and limitations in the transmission of torques, but a perfectly hermetic tightness between the two environments is ensured.

In the presently used magnetic couplings it has been noted that, when it is necessary to transmit to the inside of an environment the rotary motion at high angular speed, serious drawback of sliding motion of the internal shaft with respect to supporting stationary structures may be found especially when in the inner environment aggressive conditions exist owing to particular values of temperature, pressure or to the presence of aggressive chemical substances.

For example, the use of the standard lubricated roller or ball bearings between a moving shaft and supporting stationary members may lead to serious drawbacks since either the lubricant may be contaminated by chemical substances or under particular conditions of temperature and pressure it may come out and polluting the inner environment.

Sleeve bearing with low friction coefficient of the so called selflubricating type can be adopted, for example consisting of graphite bushings within which a perfectly milled metal shaft rotates, but these bushings have the drawback of a fast wearing owing to which frequent maintenance and substitution operations are needed and graphite powders are originated which are potentially polluting for the inner environment.

This drawback can be solved by using bushings of plastic material resisting to high temperatures and having low friction coefficient, such as polytetrafluoroethylene, but these bushing are not always resistant enough to the high temperature which can be faced.

A further problem raised in the case of magnetic couplings, especially when their rotation takes place at very high speed, is due to the easiness by which internal rotor thereof may hit, especially in the head portion against stationary members of the supporting structures owing to axial displacements thereof, whereby very serious frictions and often destruction of the physical integrity of the coupling are generated.

Another drawback which may occur with the sleeve bearings is their overheating with a substantial melting of their components leading to the so called seizure which, as a rule, has tremendous consequences for the functionality of the coupling.

The most important and authoritative attempt to obtain a floating in suspended condition of the internal rotor of a magnetic coupling, relieving the above mentioned problem, is that disclosed in FR-A-2373729 describing and claiming magnetic transmission means particularly conceived to transmit a torque of a high speed rotating external shaft inside a high pressure closed vessel. This magnetic coupling uses a first set of each other facing permanent magnets, consisting of magnets housed in an external driving hollow rotor and corresponding magnets housed in an internal driven rotor respectively for moving in rotation the driven rotor and at least a second separate set of permanent magnets arranged at an end of the driven internal rotor and operating in axial direction, according to a reciprocal reppelling action, to assure the floating condition of the driven rotor with respect to the supports thereof.

A second prior art publication appearing rather pertinent is DE-A-3039810 disclosing a magnetic coupling, comprising a movable driving member arranged outside a closed vessel and a movable driven member arranged inside the closed vessel itself, being both movable members separated by a sealing bell-like member, and having two different useful purposes, namely to generate:
a) either an axial displacement, without any rotary motion, of the driven member against a similar axial displacement of the driving member;
b) or a rotary motion, without any axial displacement, of the driven member against rotation of the driving member, having in mind to control and limit the torque transmitted by the coupling itself in order to avoid damages to driven equipments in case of sudden blocking thereof.

These purposes are provided by a plurality of annular permanent magnets, staked in form of two cylindrical assemblies, wereby the magnetic surfaces are facing each other. In the first case the number of annular pemanent magnets facing each other controls the axial displacement of a valve member, whereas in the second case the number of confronting annular permanent magnets controls the maximum torque which can be transmitted to the strirrer connected to the driven member.

The problems connected with the use of sleeve bearings (bearings formed by bushings) in a magnetic coupling used in autoclaves at medium temperature and mediun to low pressure are solved, according to the present invention, by a magnetic coupling, having vertical axis, for transmitting a rotary motion from a driving shaft to a driven, also vertical, shaft with a lower end located in a closed container to which are integrally connected stirring blades, said coupling comprising an outer rotor rigidly connected to said driving shaft, an inner rotor rigidly connected to a portion of said driven shaft arranged outside the closed container, a fixed bell separating said outer and inner rotors, said bell having a downwards faced open end connected to a wall of said container, said outer and inner rotors being provided with each other faced surfaces to which respective cylindrical assemblies of permanent magnets are connected, so that the respective permanent magnets are each other faced and magnetically interacting, said permanent magnet assemblies being axially staggered, said driven shaft being mounted on two end bushings, characterized in that said permanent magnets of said cylindrical assemblies are comprised of rod-like members parallel to the driven shaft and are enclosed in means preventing the contact of the permanent magnets with the outer and inner atmosphere respectively and in that the lower and upper ends of said inner rotor spaced from the adjacent ends of said bushings for a predetermined tolerance (a few millimeters) in order to allow a limited axial shift of the shaft, the staggering between said two permanent magnet assemblies being of such an amount to produce an axial force, acting on said internal rotor, and maintaining the rotor itself in a suspended and floating condition between said two bushings.

The features and advantages of the present invention shall be more evident from the following detailed description of an embodiment thereof not to be construed in a limiting way according to the enclosed drawings, wherein:
Figure 1 is an axial cross-section view of a magnetic coupling according to the present invention,

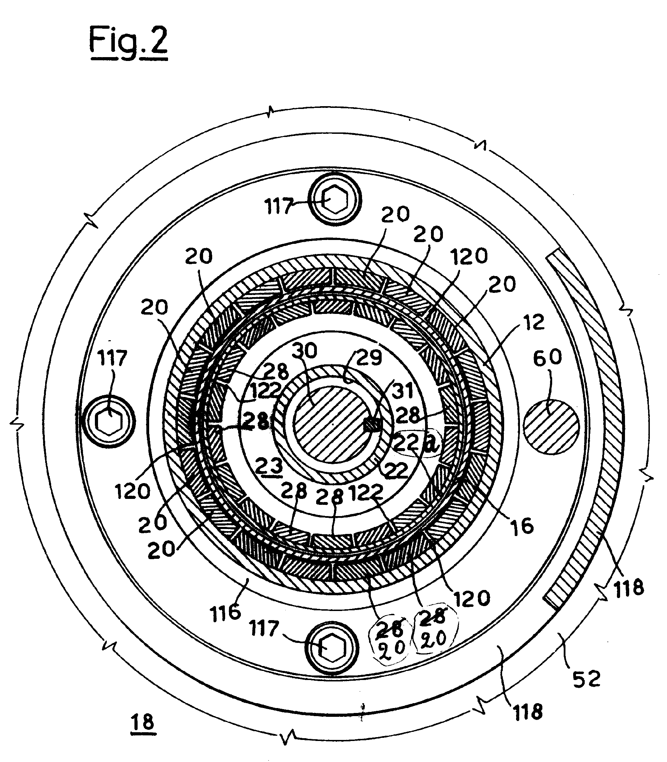

Figure 2 is a cross section view, according to the lines II-II of figure 1.

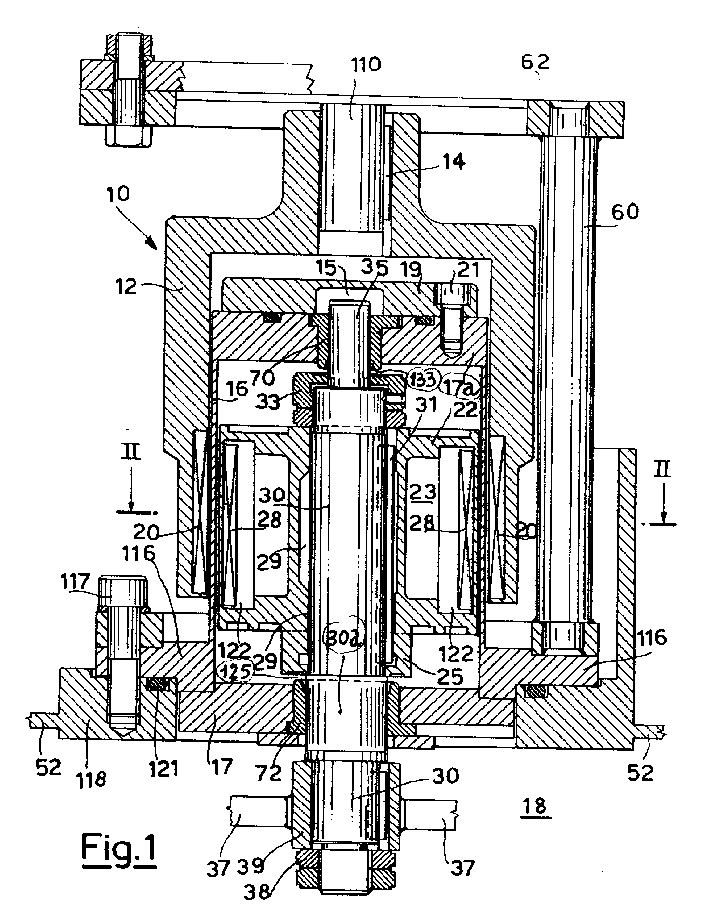

Considering the figures 1 and the magnetic coupling 10 comprises a first bell shaped outer rotor 12 connected through a suitable spline 14 to a motor shaft 110. Said bell shaped rotor 12 is inserted onto and around a stationary cylindrical bell 16 upwardly closed and downwardly open, being into communication with an inner environment 18, such as a sterylizing or pressure vessel which, as it is known, may operate either under vacuum and/or under pressure. Said stationary cyclindrical bell 16 separates the inner environnment 18 from the outer environnment.

The bell 16 at its base has a circular flange 116 anchored by means of bolts 117 to a counterflange 118 formed in the wall 52 of the container 18. A seal 121 provides the seal tightness between the flange and the counterflange.

To the flange 116 a disk 17 is rigidly connected, for example by means of bolts, not shown, having an axial hole in which a bushing 72 of anti-friction material, preferably of a plastic material known under the trademark Rulon, (registered TM of the US Company Dixon), is seated.

The bell shaped outer rotor 12 at the inner side surface towards the lower edge has an annular area or bell consisting of an assembly 20 of rod like permanent magnets forming a cylinder fixed by known means within a corresponding cavity 120 formed in said rotor 12.

Preferably the rotor 12 has a metal core in which the cavity 120 is formed, the whole being embedded within a case of synthetic resin such as a polyamide resin.

Within the fixed cylinder bell 16 an inner rotatable rotor 22 is housed, having substantially cylindrical shape, with enlarging and balancing undercuts 23.

Along the outer surface of the rotor a cavity 122 is provided, in which rodlike permanent magnets 28 are seated and, consequently, positioned in front of the permanent magnets 20, connected to the outer rotor 12.

From figure 1 it is observed that the assembly of permanent magnets 20 is axially staggered with respect to the assembly of permanent magnets 28 for the reason and with the consequences hereinafter depicted.

Axially the rotor 22 as an axial bore 29 in which a driven shaft 30 passes, being anchored to the rotor 22 by means of the spline 31. The shaft 30 is preferably surface coated with a hard material having hardness between 1,000 and 2,500 microvickers.

The shaft 30 in the lower part 30a passes through the bushing 72 and protrudes within the container 18, ending with two fastening rings 38 serving to anchor in the right position stirring blades 37 protruding from a hub 39. The blades are preferably molded from plastic material wereby their size and property constancy makes it easier their both static and dynamic balancing which, if defective, may react onto supports and shaft bearings with the serious consequences obvious for those skilled in the art.

Upwardly the shaft 30 ends with a double ring 33 having a reduced portion of the shaft 35 rotatably inserter in a bushing 70, like the bushing 72, and housed within an axial bore formed in the upper plate 17a of the stationary cylindrical bell 16.

A protection and hermetic closure plate 19 is fixed by means of bolts 21 above the upper plate 17a, the plate 19 having a cavity 15 in which the end of the reduced portion of the shaft 35 is freely housed. From the figure 1 it is particularly realized that the center portion of the shaft 30, upwardly limited by the ring 33 and downwardly by the appendix 25 of the inner rotor 22 has a tolerance of just a few millimiters with respect to the adiacent ends of the bushings 70 and 72, whereby a limited axial displacement of the shaft 30 is possible without rubbing between radially facing surfaces. This feature, together with that of the axial staggering of the permanent magnets assemblies 20 and 28 is very important since it permits the operation of the magnetic coupling without intervention of lubricating fluids and without having the contacting surfaces immersed within a liquid, as it happens in other devices for magnetic transmission of motion to stirrers, mixers immersed in liquids, or hydraulic pumps.

Lastly in figure 1 a colum support 60 is depicted supporting a motor supporting plate 62, through which the shaft 110, rotating the outer rotor 12, is received.

The operation of the magnetic coupling according to the present invention, mainly as regards the maximum reduction of friction between the shaft 30 and the stationary parts facing therewith and in order to prevent seizure conditions of the movable parts with respect to the stationary part, is mainly based on the fact that the permanent magnet assembly 20 of the bell shaped outer rotor 12 is staggered with respect to the assembly 28 of permanent magnets of the inner rotor 22, whereby an axial magnetic force is originated so that a vertical lifting component is applied to the assembly 28 by said assembly 20 thus maintaining said inner rotor 22 in a suspended condition, thanks also to the already mentioned tolerances.

Of course the perfect balancing of the stirring blades mounted at lower end of the shaft 30 is added.

Modifications are possible within the scope of the appended claims.

## Claims

1. Magnetic coupling, having vertical axis, for transmitting a rotary motion from a driving vertical shaft (110) to a driven, also vertical, shaft (30) with a lower end located in a closed container (18) to which are integrally connected stirring blades (37, 39), said coupling comprising an outer rotor (12) rigidly connected to said driving shaft (110), an inner rotor (22) rigidly connected to a portion of said driven shaft (30) arranged outside the closed container (18), a fixed bell (16) separating said outer and inner rotors (12, 22), said bell having a downwards faced open end connected to a wall (52) of said container (18), said outer and inner rotors (12, 22) being provided with each other faced surfaces to which respective cylindrical assemblies of permanent magnets (20, 28) are connected, so that the respective permanent magnets (20, 28) are each other faced and magnetically interacting, said permanent magnet assemblies being axially staggered, said driven shaft (30) being mounted on two end bushings (70, 72), characterized in that said permanent magnets (20, 28) of said cylindrical assemblies are comprised of rod-like members parallel to the driven shaft (30) and are enclosed in means preventing the contact of the permanent magnets (20, 28) with the outer and inner atmosphere respectively and in that the lower and upper ends (25, 33) of said inner rotor (22) are spaced from the adjacent ends of said bushings (70, 72) for a predetermined tolerance (a few millimeters) in order to allow a limited axial shift of the shaft (30), the staggering between said two permanent magnet assemblies being of such an amount to produce an axial force, acting on said internal rotor (22), and maintaining the rotor (22) itself in a suspended and floating condition between said two bushings (70, 72).

2. Magnetic coupling, according to claim 1, characterized in that said shaft (30) has surface coating of hard material having hardness comprised between 1,000 and 2,500 microvikers.

3. Magnetic coupling, according to claim 2, characterized in that between the ends of said inner rotor (22) and the thereto adjacent ends of said bushings (70, 72) is permitted a tolerance at least equal to the axial displacement of said shaft (30) during its operation, as caused by said axial component of magnetic force.

## Patentansprüche

1. Magnetkupplung mit einer vertikalen Achse zur Übertragung einer Drehbewegung von einer vertikalen Antriebswelle (110) auf eine ebenfalls vertikale Abtriebswelle (30), deren unteres Ende sich in einem geschlossenen Behälter (18) befindet, mit dem Rührblätter (37, 39) integral verbunden sind, wobei die Kupplung einen fest mit der Antriebswelle (110) verbundenen äußeren Rotor (12), einen fest mit einem außerhalb des geschlossenen Behälters (18) befindlichen Abschnitt der Abtriebswelle (30) verbundenen inneren Rotor (22), eine fixierte Muffe (16), die den äußeren und den inneren Rotor (12, 22) trennt, umfaßt, wobei die Muffe ein nach unten gerichtetes offenes Ende aufweist, das mit einer Wand (52) des Behälters (18) verbunden ist, wobei der äußere und der innere Rotor (12, 22) mit einander gegenüberliegenden Oberflächen versehen sind, mit denen jeweils zylindrische Anordnungen von Dauermagneten (20, 28) verbunden sind, so daß die jeweiligen Dauermagneten (20, 28) einander gegenüberliegen und magnetisch wechselwirken, wobei die Dauermagnet-Anordnungen axial gegeneinander versetzt sind, wobei die Abtriebswelle (30) auf zwei Endbuchsen (70, 72) montiert ist, dadurch gekennzeichnet, daß die Dauermagneten (20, 28) der zylindrischen Anordnungen stabartige Elemente parallel zur Abtriebswelle (30) umfassen und von einer Vorrichtung umschlossen werden, die den Kontakt der Dauermagneten (20, 28) mit der äußeren bzw. inneren Atmosphäre verhindern, und dadurch, daß das obere und das untere Ende (25, 33) des inneren Rotors (22) von den benachbarten Enden der Buchsen (70, 72) innerhalb einer vorbestimmten Toleranz (einige Millimeter) beabstandet sind, um eine begrenzte axiale Verschiebung der Welle (30) zu erlauben, wobei die Versetzung zwischen den beiden Dauermagnet-Anordnungen eine derartige Größenordnung hat, daß eine Axialkraft entsteht, die auf den inneren Rotor (22) einwirkt und den Rotor (22) selbst in einem hängenden und schwebenden Zustand zwischen den beiden Buchsen (70, 72) hält.

2. Magnetkupplung nach Anspruch 1, dadurch gekennzeichnet, daß die Welle (30) eine Oberflächenbeschichtung aus einem harten Material mit einer Härte zwischen 1000 und 2500 Mikrovickers aufweist.

3. Magnetkupplung nach Anspruch 2, dadurch gekennzeichnet, daß zwischen den Enden des inneren Rotors (22) und den dazu benachbarten Enden der Buchsen (70, 72) eine Toleranz zulässig ist, die mindestens gleich der axialen Verschiebung des Welle (30) während ihres Betriebs ist, die durch die axiale Komponente der Magnetkraft verursacht wird.

## Revendications

1. Accouplement magnétique, ayant un axe vertical, pour transmettre un mouvement rotatif depuis un arbre vertical d'entraînement (110) à un arbre entraîné (30) également vertical ayant une extrémité inférieure située dans un récipient fermé (18) à laquelle sont connectées d'un seul tenant des aubes d'agitation (37, 39), ledit accouplement comprenant un rotor extérieur (12) connecté rigidement audit arbre d'entraînement (110), un rotor intérieur (22) connecté rigidement à une partie dudit arbre entraîné (30) disposée à l'extérieur du récipient fermé (18), une cloche fixe (16) séparant lesdits rotors extérieur et intérieur (12, 22), ladite cloche ayant une extrémité ouverte tournée vers le bas et connectée à une paroi (52) dudit récipient (18), lesdits rotors extérieur et intérieur (12, 22) étant pourvus de surfaces tournées l'une vers l'autre auxquelles sont connectées des ensembles cylindriques respectifs d'aimants permanents (20, 28) de manière que les aimants permanents (20, 28) respectifs soient tournés l'un vers l'autre et interagissent magnétiquement, lesdits ensembles d'aimants permanents étant disposés axialement en quinconce, ledit arbre entraîné (30) étant monté sur deux paliers d'extrémité (70, 72), caractérisé en ce que lesdits aimants permanents (20, 25) desdits ensembles cylindriques sont constitués d'organes en forme de tige, parallèles à l'arbre entraîné (30) et sont contenus dans un moyen empêchant le contact des aimants permanents (20, 28) avec l'atmosphère extérieure et intérieure respectivement et en ce que les extrémités inférieure et supérieure (25, 53) dudit rotor intérieur (22) sont espacées des extrémités adjacentes desdits paliers (70, 72) d'une valeur de jeu prédéterminée (quelques millimètres), en vue de permettre un déplacement axial limité de l'arbre (30), la disposition en quinconce entre lesdits deux ensembles d'aimants permanents étant d'une valeur permettant de produire une force axiale, agissant sur ledit rotor intérieur (22), et maintenant le rotor (22) lui-même dans un état suspendu et flottant entre lesdits deux paliers (70, 72).

2. Accouplement magnétique selon la revendication 1, caractérisé en ce que ledit arbre (30) présente un revêtement de surface en matériau dur, ayant une dureté comprise entre 1000 et 2500 microvikers.

3. Accouplement magnétique selon la revendication 2, caractérisé en ce que, entre les extrémités dudit rotor intérieur (22) et les extrémités leur étant adjacentes desdits paliers (70, 72), on permet une valeur de jeu égale au déplacement axial dudit arbre (30) durant son fonctionnement, provoqué par ladite composante axiale de force magnétique.
